# EUROPÄISCHE PATENTSCHRIFT

(11) **EP 0 443 182 B1**
(45) Veröffentlichungstag und Bekanntmachung des Hinweises auf die Patenterteilung: **18.11.1993**
(21) Anmeldenummer: 90125023.3
(22) Anmeldetag: 20.12.1990
(51) Int. Cl.: B64C 1/18, E06B 5/12

(54) **Dekompressionspaneel**
Decompression panel
Panneau de décompression

(30) Priorität: 27.01.1990 DE 4002447
(43) Veröffentlichungstag der Anmeldung: 28.08.1991
(73) Patentinhaber: Deutsche Aerospace Airbus Gesellschaft mit beschränkter Haftung, 21129 Hamburg (DE)
(72) Erfinder: Hararat-Tehrani, Mohammad, W-2800 Bremen (DE)

(56) Entgegenhaltungen:
- DE-C- 3 715 328
- GB-A- 2 010 398

## Beschreibung

Die Erfindung bezieht sich auf ein Dekompressionspaneel nach dem Oberbegriff des Anspruchs 1.

Explosive Dekompressionen können bei Luftfahrzeugen auftreten, wenn diese in Höhen fliegen, in denen ein merklich niedrigerer Luftdruck herrscht als in Bodennähe. In den Rümpfen solcher Luftfahrzeuge ist es notwendig, Luftverhältnisse zu schaffen, wie in Bodennähe, so daß im Rumpf gegenüber dem Außenbereich ein Überdruck entsteht. Bei bekannten Luftfahrzeugen ist neben dem Passagierraum auch ein Frachtraum vorgesehen, der durch einen Zwischenboden vom Passagierraum getrennt ist. Außerdem kann der Frachtraum noch durch besondere Verkleidungswände abgedichtet sein. Zwischen beiden Räumen ist es notwendig, ein Druckausgleichssystem zu installieren, da eine explosive Dekompression sonst zur Zerstörung des Zwischenbodens und der darin verlegten Steuersysteme führen kann.

Bei einem bekannten Druckausgleichssystem nach der DE-PS 37 15 328 sind die Öffnungen in der Zwischenwand bzw. im Zwischenboden des Frachtraums zum Passagierraum vorgesehen und weisen über Federklammern gehaltene und als Dekompressionspaneele ausgebildete Platten auf, die gleichzeitig die Wand bzw. den Boden und die Platte randseitig über ein gegenüberstehendes Flanschelement untergreifen. Die Federklammern sind im übergreifenden Bereich jeweils mit einer Sollbruchstelle derart versehen, daß sie bei einem definierten Differenzdruckbereich brechen können und somit das Dekompressionspaneel bei einer explosiven Dekompression in Richtung Frachtraum und Passagierraum aus der Öffnung drückt. Durch die Ausbildung der Federklammern mit zwei Sollbruchstellen ist kein ausreichend genau definierter Ansprechbereich zum Freigeben der Öffnung bei einem Differenzdruck gewährleistet, da über das gegenüberstehende Flanschelement zusätzliche Haltekräfte aufgebracht werden.

Der Erfindung liegt daher die Aufgabe zugrunde, ein Dekompressionspaneel zu schaffen, das durch die Verwendung von einfachen Befestigungsmitteln ein definiertes Ansprechverhalten für verschiedene Differenzdruckbereich ermöglicht und gleichzeitig ein paßgenaues Zusammenfügen der Plattenteile in der Öffnung bei einer optimalen Abdichtung gewährleistet ist.

Diese Aufgabe wird erfindungsgemäß durch die kennzeichnenden Merkmale des Anspruchs 1 gelöst. Weitere vorteilhafte Merkmale beinhalten die Unteransprüche.

Die mit der Erfindung hauptsächlich erzielten Vorteile bestehen darin, daß die Dekompressionsöffnung bei einer "blow-in" und einer "blow-out" Dekompression jeweils von einem Plattenteil freigebbar ist, das über mehrere, verteilt angeordnete Befestigungslaschen gehalten wird, die nur in Freigaberichtung der Plattenteile angeordnet sind. Gegenüberliegend der Laschen sind die Plattenteile abgestützt und durch ihre Kantenanschrägung formschlüssig gehalten, so daß bei einer Dekompression die Plattenteile unter Überwindung der Haltekraft der Befestigungslaschen aus der jeweiligen Öffnung herausgleiten.

Die Befestigungslasche weist eine als sogenanntes Filmgelenk ausgebildete Sollbruchstelle auf, die eine entsprechende Bemessung zum Ansprechen aufweist, welche bei einer explosiven Dekompression bricht und die entsprechenden Plattenteile freigibt.

Zur gleichzeitigen Abstützung und gleitenden Freigabe eines Plattenteils bzw. der Plattenteile sind die Kanten der Plattenteile und der Öffnung zur Horizontalebene schräg angestellt, was eine Öffnung in Richtung des Frachtraumes und in Richtung des Passagierraumes ermöglicht.

Ein Ausführungsbeispiel der Erfindung ist in der Zeichnung dargestellt und wird im folgenden näher beschrieben. Es zeigen:
- Fig. 1: eine Ansicht auf eine Frachtraumwand mit einer über Plattenteile verschlossenen Dekompressionsöffnung,
- Fig. 2: einen Schnitt nach der Linie II-II der Fig. 1,
- Fig. 3: eine vergrößerte Darstellung der Einzelheit Z,
- Fig. 4: eine Draufsicht auf eine Befestigungslasche,
- Fig. 5: einen Schnitt nach der Linie V-V der Fig. 4,
- Fig. 6: einen Schnitt durch die Plattenteile bei einer "blow-out-Öffnungsstellung",
- Fig. 7: einen Schnitt durch die Plattenteile bei einer "blow-in-Öffnungsstellung" und
- Fig. 8: eine vergrößerte Darstellung der Einzelheit Y aus Fig. 7.

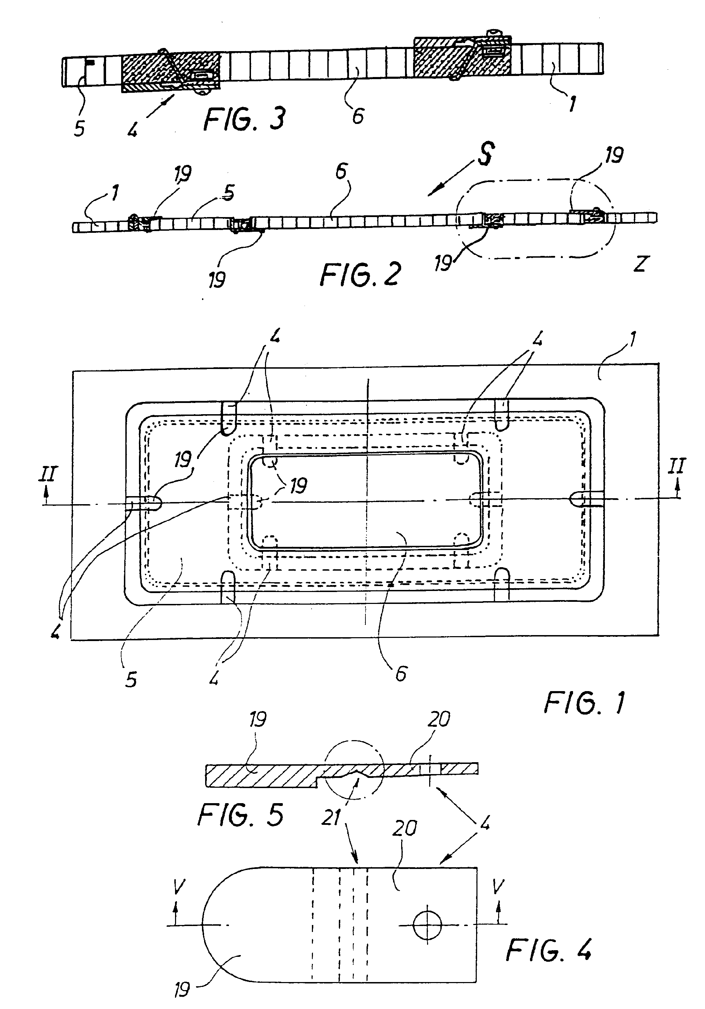

In einer Zwischenwand oder in einem Zwischenboden 1 eines Frachtraumes ist eine Dekompressionsöffnung 2 vorgesehen, die von einem Plattenelement 3 verschlossen ist. Dies umfaßt mindestens zwei in der Offnung 2 gehaltene und miteinander über Befestigungslaschen 4 verbundene Plattenteile 5 und 6. Das erste Plattenteil 5 umgibt das zweite Plattenteil 6. In einer Schließstellung S, wie Fig. 2 zeigt, ist das erste Plattenteil 5 im zweiten Plattenteil 6 über die Befestigungslaschen 4 gehalten.

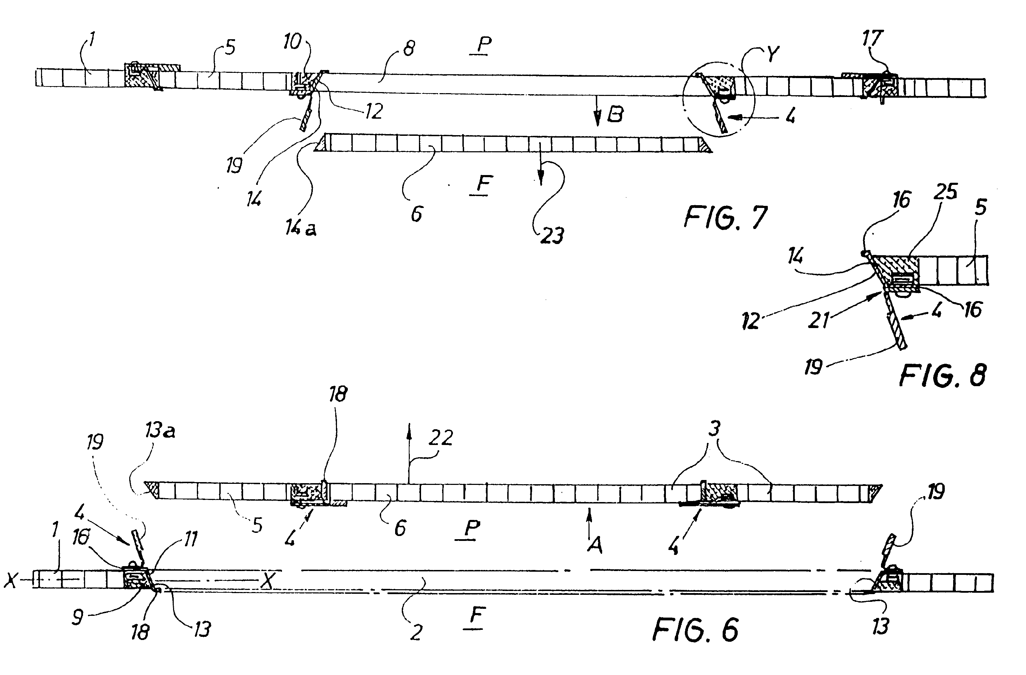

In einer "blow-out-Öffnungsstellung" A (Fig. 6) sind die beiden Plattenteile 5 und 6 miteinander verbunden und geben gemeinsam die Öffnung 2 frei, wobei in einer "blow-in-Öffnungsstellung" B (Fig. 7) nur das erste Plattenteil 6 eine Öffnung 8 im zweiten Plattenteil 5 freigibt, das in der Wand 1 gehalten wird.

Ein Innenrand 9 der Dekompressionsöffnung 2 sowie ein Innenrand 10 der Öffnung 8 im zweiten Plattenteil 5 sind jeweils von einem Rahmen 11,12 eingefaßt, der einen zu einer Horizontalebene X-X schräg angestellten, umlaufenden Steg 13,14 aufweist, der eine Stütz- und Gleitfläche bildet. Am Steg 13 stützt sich in der Schließstellung S die ebenfalls entsprechend schräg angestellte, umlaufende Kante 13a des zweiten Plattenteils 5 und am Steg 14 die schräg angestellte Kante 14a des ersten Plattenteils 6 ab.

Die sich jeweils gegenüberstehenden Stege 13 der Dekompressionsöffnung 2 verlaufen zum Frachtraum F hin und entgegen der Öffnungsrichtung A (Fig. 6) keilförmig zu, wobei die sich gegenüberstehenden Kanten 13a des zweiten Plattenteils 5 entsprechend keilförmig zulaufend ausgeführt sind. Hierdurch sind die Plattenteile 5,6 in der Schließstellung S (Fig. 2) am Steg 11 in einer gleichen Horizontalebene X-X wie die Wand gehalten.

In der Öffnung 8 des zweiten Plattenteils 5 ist gegenüber dem Steg 13 dieser Steg 12 entgegen der Öffnungsrichtung B (Fig. 7) und zum Passagierraum P hin keilförmig zulaufend ausgeführt.

Der Rahmen 11,12 ist im Querschnitt Z-förmig ausgeführt, wobei ein Halteschenkel 16 jeweils die Plattenober- bzw. -unterseite übergreift und mit dem Plattenteil über eine Schraube 17 verbunden ist. Der weitere Schenkel bildet z.B. ein Stützelement 18 für die Plattenteile 5 und/oder 6 in der Öffnung 2 und 8.

Dieses Stützelement 18 ist jeweils am keilförmig zulaufenden Ende des Rahmenstegs 11 und 12 angeordnet. Gegenüberliegend des Steges 11 und 12 sind über den Umfang verteilt die Befestigungslaschen 4 angeordnet, welche über die Schraube 17 mit dem Halteschenkel 16 verbunden sind.

Die Befestigungslasche 4 besteht im wesentlichen aus einem plattenförmigen Teil mit einem über den Halteschenkel 16 des Rahmens 11,12 in die Öffnung 2 und 8 hineinragenden Laschenteil 19, das zum Halteteil 20 über eine Sollbruchstelle 21 verbunden ist (Fig.4 und 5). Diese weist gegenüber der Materialdicke der Lasche 4 einen verminderten Querschnitt auf.

Wie Fig. 2 näher zeigt, übergreift in der Schließstellung S Das Laschenteil 19 der Befestigungslasche 4 das zweite Plattenteil 5 und das erste Plattenteil 6 wird vom Laschenteil 19 der am zweiten Plattenteil 5 befestigten Lasche 4 untergriffen.

Bei einer explosiven Dekompression kann das Plattenteil, gebildet aus dem ersten und dem zweiten Plattenteil 5 und 6 (Fig. 6), in der "blow-out-Öffnungsstellung A sich aus der Öffnung 2 in Pfeilrichtung 22 bewegen. Hierbei lösen sich die Kantenflächen 13 und 13a voneinander, wobei das Laschenteil 19 der Befestigungslasche 4 umgebogen und in der Sollbruchstelle abgerissen wird und das Plattenteil vollends freigibt.

Bei einer "blow-in-Öffnungsstellung" B (Fig. 7) wird das erste Plattenteil 6 aus der Öffnung 8 des zweiten Plattenteils 5 gelöst, das mit der Wand 1 aufgrund der Keilverbindung der sich gegenüberstehenden Kanten 13 und 13a verbunden bleibt. Bei dieser Öffnungsbewegung des Plattenteils 6 in Pfeilrichtung 23 wird ebenfalls das Laschenteil 19 in der Sollbruchstelle 21 weggebogen und abgerissen, so daß das Plattenteil 6 die Offnung 8 freigeben kann.

## Patentansprüche

1. Dekompressionspaneel für Zwischenwände und -böden (1) von Passagier- und Frachträume aufweisenden Luftfahrzeugen, bestehend aus einem in eine Dekompressionsöffnung (2) einsetzbaren Plattenelement (3), das über mehrere Befestigungselemente (4) lösbar gehalten ist, dadurch gekennzeichnet, daß das Plattenelement (3) mindestens zwei in der Öffnung (2) gehaltene und miteinander über Befestigungslaschen (4) verbundene Plattenteile (5,6) umfaßt, und daß ein Innenrand (9) der Öffnung (2) und ein Innenrand (10) des zweiten Plattenteils (5) jeweils von einem Rahmen (11,12) eingefaßt ist, der einen zur Horizontalebene (X-X) schräg angestellten umlaufenden Steg (13,14) mit einer Gleit- und Stützfläche aufweist und daß das erste Plattenteil (6) von dem zweiten Plattenteil (5) umgeben ist, welches im Zwischenboden (1) in einer Schließstellung (S) gemeinsam mit dem ersten Plattenteil (6) über weitere Befestigungslaschen (4) gehalten wird, und daß in einer "blow-in-Öffnungsstellung" (B) das erste Plattenteil (6) durch Verbiegung von Befestigungselementen (4) am zweiten Plattenteil (5) und in einer "blow-out-Öffnungsstellung" (A), das mit dem ersten Plattenteil (6) über die Befestigungslaschen (4) verbundene zweite Plattenteil (5) gemeinsam mit diesem durch Verbiegung der Befestigungslaschen (4) am Zwischenboden (1) lösbar gehalten ist.

2. Dekompressionspaneel nach Anspruch 1, dadurch gekennzeichnet, daß an der Gleit- und Stützfläche des die Dekompressionsöffnung (2) umgebenden Rahmens (11) in der Schließstellung (S) eine entsprechend schräg angestellte, umlaufende Kantenfläche (13a) des zweiten Plattenteils (5) anliegend abgestützt ist.

3. Dekompressionspaneel nach Anspruch 1 oder 2, dadurch gekennzeichnet, daß an der Gleit- und Stützfläche des den inneren Öffnungsrand (10) des zweiten Plattenteils (5) umgebenden Rahmens (12) in der Schließstellung (S) eine entsprechend schräg angestellte, umlaufende Kantenfläche (14a) des ersten Plattenteils (6) anliegend abgestützt ist.

4. Dekompressionspaneel nach einem der Ansprüche 1 bis 3, dadurch gekennzeichnet, daß die sich jeweils gegenüberstehenden Gleit- und Stützflächen am Innenrand (9) der Dekompressionsöffnung (2) sowie die Gleit- und Stützfläche am Außenrand (13a) des zweiten Plattenteils (5) entgegen der "blow-out-Öffnungsstellung" (A) hin keilförmig zulaufend ausgeführt sind.

5. Dekompressionspaneel nach einem der Ansprüche 1 bis 4, dadurch gekennzeichnet, daß die sich jeweils gegenüberstehenden Gleit- und Stützflächen des inneren Öffnungsrandes (10) des zweiten Plattenteils (5) sowie die Gleit- und Stützflächen am Außenrand (14a) des ersten Plattenteils (6) entgegen der "blow-in-Öffnungsstellung" (B) hin keilförmig zulaufend ausgeführt sind.

6. Dekompressionspaneel nach einem der Ansprüche 1 bis 5, dadurch gekennzeichnet, daß der Rahmen (11,12) im Querschnitt Z-förmig ausgeführt ist und ein Laschenteil (19) die Ober- bzw. Unterseite der Plattenteile (5,6) übergreift bzw. untergreift und der weitere Schenkel ein Stützelement (18) für die Plattenteile (5,6) in der Plattenebene (X-X) bildet.

7. Dekompressionspaneel nach Anspruch 6, dadurch gekennzeichnet, daß das Stützelement (18) des Rahmens (11,12) jeweils am keilförmig zulaufenden Ende des Rahmensteges (13,14) angeordnet ist, dem am abgekehrten, gegenüberstehenden Ende, über den Umfang des Rahmens (11,12) verteilt und mit diesem am Halteschenkel (16) verbunden, die Befestigungslaschen (4) angeordnet sind, welche sich mit einem freien Ende über eine Oberfläche der beiden Plattenteile (5,6) erstrecken und diese haltend untergreifen.

8. Dekompressionspaneel nach einem der Ansprüche 1 bis 7, dadurch gekennzeichnet, daß die Befestigungslasche (4) ein Filmgelenk aufweist, das im Bereich der Schenkelkante vorgesehen ist und eine Sollbruchstelle (21) bildet, die eine definierte Haltekraft aufweist.

9. Dekompressionspaneel nach einem der Ansprüche 1 bis 8, dadurch gekennzeichnet, daß die zwischen dem Rahmen (11,12) und dem Plattenteil (5,6) im Bereich einer Halteschraube (17) für die Befestigungslasche (4) jeweils ein Dichtstreifen (25) angeordnet ist.

10. Dekompressionspaneel nach einem der Ansprüche 1 bis 9, dadurch gekennzeichnet, daß die verbundenen Plattenteile (5,6) zwischen den keilförmig zulaufenden Gleit- und Stützflächen des Öffnungsrandes (9) im Zwischenboden (1) derart gehalten sind, daß bei einer "blow-out-Öffnungsstellung" (A) die Plattenteile (5,6) gemeinsam in den Passagierraum (P) verlagerbar sind.

11. Dekompressionspaneel nach einem der Ansprüche 1 bis 10, dadurch gekennzeichnet, daß das erste Plattenteil (6) zwischen den keilförmig zulaufenden Gleit- und Stützflächen am Innenrand (10) des zweiten Plattenteils (5) derart gehalten ist, daß bei einer "blow-in-Öffnungsstellung" (B) das Plattenteil (6) in den Frachtraum (F) verlagerbar ist.

## Claims

1. A decompression panel for intermediate walls and floors (1) of aircraft which have passenger and freight compartments, consisting of a plate component (3) which is insertable into a decompression aperture (2) and which is held releasably by way of several fastening components (4), characterised in that the plate component (3) comprises at least two plate parts (5,6) which are held in the aperture (2) and are connected to one another by way of fastening clips (4), and in that an inner edge (9) of the aperture (2) and an inner edge (10) of the second plate part (5) are respectively bordered by a frame (11,12) which has an encircling web (13,14) slanted with regard to the horizontal plane (X-X) and having a sliding and supporting surface and in that the first plate part (6) is surrounded by the second plate part (5) which is held in the intermediate floor (1) in a closed position (S) jointly with the first plate part (6) by way of further fastening clips (4), and in that in a "blow-in open position" (B) the first plate part (6) is held releasably by bending of fastening components (4) on the second plate part (5) and in a "blow-out open position" (A) the second plate part (5) connected by way of the fastening clips (4) to the first plate part (6) is held releasably jointly with this by bending of the fastening clips (4) on the intermediate floor (1).

2. A decompression panel according to claim 1, characterised in that in the closed position (S) a correspondingly slanted encircling edge surface (13a) of the second plate part (5) is supported butting against the sliding and supporting surface of the frame (11) surrounding the decompression aperture (2).

3. A decompression panel according to claim 1 or 2, characterised in that in the closed position (S) a correspondingly slanted encircling edge surface (14a) of the first plate part (6) is supported butting against the sliding and supporting surface of the frame (12) surrounding the inner aperture edge (10) of the second plate part (5).

4. A decompression panel according to any one of claims 1 to 3, characterised in that the respectively mutually facing sliding and supporting surfaces at the inner edge (9) of the decompression aperture (2) as well as the sliding and supporting surfaces at the outer edge (13a) of the second plate part (5) are designed tapering in a wedge-shaped manner contrary to the "blow-out open position" (A).

5. A decompression panel according to any one of claims 1 to 4, characterised in that the respectively mutually facing sliding and supporting surfaces of the inner aperture edge (10) of the second plate part (5) as well as the sliding and supporting surfaces at the outer edge (14a) of the first plate part (6) are designed tapering in a wedge-shaped manner contrary to the "blow-in open position" (B).

6. A decompression panel according to any one of claims 1 to 5, characterised in that the frame (11,12) is Z-shaped in cross-section and a clip part (19) engages over or respectively engages under the upper or lower side of the plate parts (5,6) and the further limb forms a supporting component (18) for the plate parts (5,6) in the plate plane (X-X).

7. A decompression panel according to claim 6, characterised in that the supporting component (18) of the frame (11,12) is arranged respectively at the end, tapering in a wedge-shaped manner, of the frame web (13,14), at the remote opposite end, distributed over the periphery of the frame (11,12) and connected to this at the retaining limbs (16), the fastening clips (4) are arranged, which extend with a free end over a surface of the two plate parts (5,6) and engage under these in a retaining manner.

8. A decompression panel according to any one of claims 1 to 7, characterised in that the fastening clip (4) has a film hinge which is provided in the region of the limb edge and forms a predetermined breaking point (21) which has a specific retaining force.

9. A decompression panel according to any one of claims 1 to 8, characterised in that in each case a sealing strip (25) is arranged between the frame (11,12) and the plate part (5,6) in the region of a retaining screw (17) for the fastening clip (4).

10. A decompression panel according to any one of claims 1 to 9, characterised in that the connected plate parts (5,6) are held between the sliding and supporting surfaces, tapering in a wedge-shaped manner, of the aperture edge (9) in the intermediate floor (1) in such a way that in the case of a "blow-out open position" (A) the plate parts (5,6) are jointly displaceable into the passenger compartment (P).

11. A decompression panel according to any one of claims 1 to 10, characterised in that the first plate part (6) is held between the sliding and supporting surfaces, tapering in a wedge-shaped manner, at the inner edge (10) of the second plate part (5) in such a way that in the case of a "blow-in open position" (B) the plate part (6) is displaceable into the freight compartment (F).

## Revendications

1. Panneau de décompression pour parois et planchers intermédiaires (1) d'avions comportant des espaces réservés aux passagers et au fret, consistant en un élément de plaque pouvant être monté dans une ouverture de décompression (2), élément qui est maintenu par plusieurs éléments de fixation (4) de manière détachable, panneau de décompression caractérisé en ce que l'élément de plaque (3) comprend au moins deux parties de plaques (5, 6) maintenues dans l'ouverture (2) et reliées l'une à l'autre par des pattes de fixation (4), et en ce qu'un bord intérieur (9) de l'ouverture (2) et un bord intérieur (10) de la deuxième partie de plaque (5) sont enchâssés respectivement par un cadre (11, 12), qui présente une âme (13, 14) faisant tout le tour disposée obliquement par rapport au plan horizontal (X-X) avec une surface d'appui et de glissement et en ce que la première partie de plaque (6) est entourée par la deuxième partie de plaque (5), qui est maintenue dans le plancher intermédiaire (1) dans une position de fermeture (S) en même temps que la première partie de plaque (6) au moyen d'autres pattes de fixation (4) et en ce que dans une position d'ouverture "blow-in" (B) la première partie de plaque (6) est maintenue de façon détachable en repliant les éléments de fixation (4) sur la deuxième partie de plaque (5) et dans une position d'ouverture "blow-out" (A) maintient la deuxième partie de la plaque (5) reliée à la première partie de plaque (6) au moyen des pattes de fixation (4) en même temps que celle-ci en repliant les pattes de fixation (4) sur le plancher intermédiaire (1).

2. Panneau de décompression selon la revendication 1, caractérisé en ce que sur la surface de glissement et d'appui au cadre (11) entourant l'ouverture de décompression (2) dans la position de fermeture (S) s'appuie une surface de bordure (13a) disposée en conséquence de façon oblique, faisant le tour de la deuxième partie de plaque (5).

3. Panneau de décompression selon la revendication 1 ou 2, caractérisé en ce que sur la surface de glissement et d'appui du cadre (12) entourant le bord intérieur de l'ouverture (10) de la seconde partie de plaque (5), dans la position de fermeture (S), s'appuie une surface de bordure (14a) disposée obliquement en conséquence, faisant tout le tour, de la première partie de plaque (6).

4. Panneau de décompression selon l'une des revendications 1 à 3, caractérisé en ce que les surfaces de glissement et d'appui, se faisant respectivement vis-à-vis, sont réalisées sur le bord intérieur (9) de l'ouverture de décompression (2) ainsi que les surfaces de glissement et d'appui sur le bord extérieur (13a) de la deuxième partie de plaque (5) sont réalisées en forme de coin à l'encontre de la position d'ouverture "blow-out" (A).

5. Panneau de décompression selon l'une des revendications 1 à 4, caractérisé en ce que les surfaces de glissement et d'appui, se faisant respectivement vis-à-vis, du bord intérieur de l'ouverture (10) de la deuxième partie de la plaque (5) ainsi que les surfaces de glissement et d'appui sur le bord extérieur (14a) de la première partie de plaque (6) sont réalisées en forme de coin à l'encontre de la position d'ouverture "blow-in" (B).

6. Panneau de décompression selon l'une des revendications 1 à 5, caractérisé en ce que le cadre (11, 12) est doté en section transversale d'une forme en Z et une patte (19) vient en prise sur la face supérieure ou sous la face inférieure des parties de plaque (5, 6) et en ce que l'autre branche constitue un élément d'appui (18) pour les parties de plaque (5, 6) dans le plan (X-X) de la plaque.

7. Panneau de décompression selon la revendication 6, caractérisé en ce que l'élément d'appui (18) du cadre (11, 12) est disposé à l'extrémité de l'âme du cadre (13, 14) arrivant en forme de coin sur laquelle, l'extrémité opposée, située en regard, en étant réparties sur le pourtour du cadre (11, 12) et reliées à celui-ci sur la branche d'arrêt (16) sont disposées les pattes de fixation (4) qui s'étendent par une extrémité libre sur une surface des deux parties de plaque (5, 6) et viennent en prise sur celles-ci en dessous en la maintenant.

8. Panneau de décompression selon l'une des revendications 1 à 7, caractérisé en ce que la patte de fixation (4) présente une articulation de film, qui est prévue dans la zone du bord de la branche et présente une place destinée à la rupture (21) qui procure une force définie d'arrêt.

9. Panneau de décompression selon l'une des revendications 1 à 8, caractérisé en ce qu'une bande d'étanchéité (25) est disposée entre le cadre (11, 12) et la partie de plaque (5, 6) dans la zone d'une vis d'arrêt (17) pour la patte de fixation (4).

10. Panneau de décompression selon l'une des revendications 1 à 9, caractérisé en ce que les parties de plaque (5, 6) reliées sont maintenues entre les surfaces de glissement et d'appui, arrivant en forme de coin, du bord de l'ouverture (9) dans le plancher intermédiaire (1) de telle façon que dans le cas d'une position d'ouverture "blow-out" (A), les parties de plaque (5, 6) soient déplaçables en commun dans l'espace réservé aux passagers (P).

11. Panneau de décompression selon l'une des revendications 1 à 10, caractérisé en ce que la première partie de plaque (6) est maintenue entre les surfaces de glissement et d'appui arrivant en forme de coin sur le bord intérieur (10) de la deuxième partie de plaque (5) de telle façon que dans le cas d'une position d'ouverture "blow-in" (B), la partie de plaque (6) soit déplaçable dans l'espace réservé au fret (F).
